# EUROPÄISCHE PATENTSCHRIFT

(11) **EP 1 753 536 B1**
(45) Veröffentlichungstag und Bekanntmachung des Hinweises auf die Patenterteilung: **12.03.2008**
(21) Anmeldenummer: 05747865.3
(22) Anmeldetag: 30.04.2005
(51) Int. Cl.: B01L 3/02

(54) **VORRICHTUNG ZUR AUFNAHME UND ABGABE VON FLÜSSIGKEITEN**
DEVICE FOR RECEIVING AND DISPENSING LIQUIDS
DISPOSITIF DESTINE A RECEVOIR ET DISTRIBUER DES LIQUIDES

(30) Priorität: 10.05.2004 DE 102004023517; 13.05.2004 DE 102004023690
(43) Veröffentlichungstag der Anmeldung: 21.02.2007
(73) Patentinhaber: Steinbrenner, Bernd, 69151 Neckargemünd (DE); Steinbrenner, Roger, 69434 Hirschhorn (DE)
(72) Erfinder: Steinbrenner, Bernd, 69151 Neckargemünd (DE); Steinbrenner, Roger, 69434 Hirschhorn (DE)
(74) Vertreter: Weber, Walter
(86) Internationale Anmeldenummer: PCT/EP2005/004694
(87) Internationale Veröffentlichungsnummer: WO 2005/113149

(56) Entgegenhaltungen:
- WO-A-95/31284
- DE-A1- 4 003 591
- GB-A- 2 247 950
- US-A- 4 258 761
- US-A1- 2002 059 945
- US-A1- 2003 124 735

## Beschreibung

Die Erfindung betrifft eine Vorrichtung zur Aufnahme und Abgabe von Flüssigkeiten mit einer Vielzahl von Kolben-Zylinder-Einheiten, jeweils angeordnet an einer Kolbenplatte und einer Zylinderplatte, wobei die Flüssigkeitsaufnahme und -abgabe durch eine Verschiebung der Kolben in den Zylindern mittels einer Abstandsänderung der Platten durch eine Antriebsmechanik und eine Plattenführung senkrecht zu den Plattenebenen erfolgt, wobei das Volumen durch einen oberen und einen unteren Anschlag, von denen mindestens einer mittels mindestens eines Einstellmittels einstellbar ist, bestimmt werden kann.

In der modernen biologischen Forschung kommen zunehmend Hochdurchsatzmethoden, also die massenhafte Bearbeitung von Proben, zum Einsatz, die praktisch immer mit Pipettierschritten verbunden sind. Die Proben werden in Platten mit 96, 384 oder gar 1563 Vertiefungen in einem standardisierten Format bearbeitet. Die notwendigen zahlreichen Pipettierschritte lassen sich mit herkömmlichen manuellen 8 bzw. 12-Kanal-Pipetten praktisch nicht mehr bewältigen. Man verwendet dazu Pipettierautomaten mit 96 oder 384 Kanälen (Beckman-Coulter, Gilson, Tecan, Zymark, Quiagen, Robbins, Zinsser, Perkin Elmer usw.). Diese Geräte sind jedoch extrem teuer, beanspruchen viel Stellfläche und erfordern einen großen personellen Aufwand für Programmierung, Bedienung und Wartung. Bei diesen automatisierten Pipettiersystemen wird die Kolbeneinheit durch schnelldrehende Spindelantriebe äußerst exakt parallel geführt auf- und abbewegt. Durch Stoppen in einer definierten Z-Position wird das Pipettiervolumen exakt definiert.

Bei einem manuell oder mittels eines einfachen Antriebs betriebenen Pipettiersystem ist ein solcher Spindelantrieb mit der erforderlichen schnellen und präzis simultanen Spindeldrehzahl keine Lösung, da dies entweder einen hohen mechanischen oder einen hohen Steuerungs- und Antriebsaufwand erfordert.

Eine einfache mechanische Vorrichtung mit den Merkmalen der eingangs genannten Art ist aus der US 5,540,889 bekannt. Bei dieser Vorrichtung wird die Kolbenplatte durch eine mittig an dieser angeordneten Handantriebsstange relativ zur Zylinderplatte bewegt. Ein einstellbarer Anschlag zur Vorgabe des zu pipettierenden Volumens befindet sich an der Handantriebsstange. Die Parallelität der Kolbenplatte zur Zylinderplatte wird dabei durch die Führung der Handantriebsstange und gegebenenfalls auch durch die Führung der Kolben in den Zylindern erzielt. Dieses Prinzip entspricht den allseits bekannten Mehrkanalpipetten (die oben erwähnten 8 bzw. 12-Kanal-Pipetten). Sind bei einem Pipettiervorgang sehr genaue Volumina zu handhaben, so ist eine solche Mechanik unzureichend, da derartige Führungen, im Gegensatz zu den gesteuerten Spindelantrieben der eingangs genannten Automaten, keine absolute Parallelität und damit keine exakt gleichen Volumina der zu pipettierenden Flüssigkeit gewährleisten kann, wobei ein allzu hoher Aufwand für die Genauigkeit der Plattenführung wiederum unwirtschaftlich wäre. Dieses Problem nimmt mit der Anzahl der Kolben-Zylinder-Einheiten und damit der Größe der Platten zu, so daß mit derartigen Führungen entweder nur wenige Kolben-Zylinder-Einheiten gleichzeitig betätigt werden können oder auf die Genauigkeit der Volumina verzichtet werden muß.

Der Erfindung liegt daher die Aufgabe zugrunde, eine Vorrichtung der eingangs genannten Art mit geringem technischen Aufwand zur Handhabung exakter Volumina einer größeren Anzahl von Kolben-Zylinder-Einheiten geeignet zu machen.

Die Aufgabe wird erfindungsgemäß dadurch gelöst, daß bei geringen Anforderungen an die Flächenparallelität der Plattenebenen während der Bewegung in der Plattenführung gleiche Aufnahme- und Abgabevolumina der Kolben-Zylinder-Einheiten dadurch gewährleistet sind, daß die Anschläge derart ausgebildet und angeordnet sind, daß die Parallelität der Platten in der oberen und der unteren Anschlagposition mittels der Anschläge erzielt ist.

Der erfindungsgemäße Lösungsweg besteht darin, daß es für das Pipettieren exakter Volumina nicht notwendig ist, während des gesamten Pipettiervorganges eine einheitliche Bewegung aller Kolben, also eine ständige Parallelität von Kolben- und Zylinderplatte zu gewährleisten. Vielmehr ist es für die Genauigkeit der aufgenommenen oder abgegebenen Volumina ausreichend, wenn sich alle Kolben-Zylinder-Einheiten zu genau zwei Zeitpunkten in derselben Position befinden: In einer unteren Endposition sowie einer oberen Endposition, was durch die Anschläge gewährleistet ist. Wenn diese beiden Positionen, die dem Anfang und Ende der Flüssigkeitsaufnahme bzw. umgekehrt der Flüssigkeitsabgabe entsprechen, exakt stimmen, ist es für die Exaktheit der Volumina nicht von Bedeutung, ob die Platten zwischendurch exakt parallel sind, da diese Ungleichmäßigkeiten spätestens mit dem Auftreffen auf dem jeweiligen Anschlag - also sowohl für die Flüssigkeitsaufnahme, als auch für die Flüssigkeitsabgabe - wieder ausgeglichen sind. Die Genauigkeit ist somit vom Pipettierantrieb unabhängig.

Zwei Bedingungen für ein präzises und reproduzierbares Pipettieren sind somit bei der Erfindung erfüllt:
1. Der Weg der Kolben-Zylinder-Einheiten, und damit die Größe der Volumina ist durch den Abstand von unterem Anschlag und oberem Anschlag exakt einstellbar.
2. Die Platten werden durch die Anschläge an den für die Bestimmung der Volumina entscheidenden Anfangs- und Endpositionen absolut parallel ausgerichtet.

Damit haben alle Kolben-Zylinder-Einheiten denselben Weg zurückgelegt, wodurch nicht nur das Pipettiervolumen exakt definiert ist, sondern auch sichergestellt ist, daß dieses für jeden der einzelnen Kolben-Zylinder-Einheiten des Systems identisch ist. Jede Einheit pipettiert demnach dasselbe Volumen, wobei alle Volumina gleichzeitig sehr exakt eingestellt werden können. Außerdem liegen auch die Bedienkräfte in einem praxistauglichen Bereich.

Mit der hier vorgestellten Vorrichtung steht erstmals eine kostengünstige Möglichkeit zur Durchführung einer großen Anzahl von parallelen Pipettiervorgängen für Hochdurchsatz-Arbeiten bereit. Es sind keine hohen Investitionen notwendig und auch die laufenden Kosten und das Gesamtgewicht der Vorrichtung sind wesentlich geringer als bei den eingangs erwähnten Automaten. Dies kommt insbesondere kleineren Firmen, universitären Einrichtungen oder Instituten und Firmen in Entwicklungsländern zu Gute.

Mit der erfindungsgemäßen Vorrichtung wird die Lücke zwischen Mehrkanalpipette und vollautomatischen Systemen geschlossen. Sie ermöglicht die parallele Aufnahme bzw. Abgabe von vielen, vorzugsweise 96 Flüssigkeitsproben. Das Volumen ist frei wählbar und exakt justierbar. Der Pipettiervorgang selbst ist einfach und leicht erlernbar und entspricht weitgehend dem, wie es von manuellen Pipetten schon seit Jahrzehnten bekannt ist.

Eine elektronische Steuerung bzw. ein elektrischer Antrieb ist nicht erforderlich, was den Einsatz sehr einfach gehaltener Mittel dieser Art nicht ausschließt. Einfach deshalb, weil sowohl beim Handbebtrieb, als auch bei einem motorischen Antrieb eine ungesteuerte Auf- und Abbewegung zwischen den Anschlägen ausreicht. Auch die Anschläge lassen sich, wenn sie einmal auf Parallelität justiert sind, durch eine einfache Stellbewegung mit einer Anzeigeeinrichtung einstellen. Das System kann somit ohne aufwendige Programmiertätigkeit betrieben werden. Die Bedienung ist daher ohne zeit- und kostenintensive Schulung auch von angelernten Kräften durchführbar. Wie bei herkömmlichen manuellen Pipetten läßt sich der einwandfrei Betrieb jederzeit optisch kontrollieren. Das System ist schnell und flexibel an die jeweiligen Anforderungen angepaßt und kann aufgrund seiner geringen Abmessungen auch unter räumlich beengten Bedingungen, wie etwa sterilen Werkbänken, eingesetzt werden.

Die Anschläge können auf verschiedene Weise ausgebildet sein. Wesentlich ist lediglich, daß sie eine Parallelität der Platten, also der Kolbenplatte und der Zylinderplatte in der oberen und unteren Anschlagsposition garantieren. Wird zum Beispiel die Kolbenplatte bewegt, kann die Zylinderplatte als unterer Anschlag dienen oder solche Anschläge tragen, dann braucht nur noch ein oberer Anschlag angeordnet zu werden. Auch dieser Anschlag kann selbst eine ebene Platte sein oder es kann sich um zwei linienförmige Anschläge handeln. Zweckmäßigerweise wird jedoch vorgesehen, daß jeder der oberen und unteren Anschläge mindestens drei Anschlagspunkte aufweist, die im Außenbereich der bewegten Platte anschlagen. Mindestens drei Punkte deshalb, weil dadurch die genau Lage einer Fläche definiert werden kann. Pipettiervorgänge werden in der Regel mittels Arbeitsplatten vorgenommen, die ein orthogonales Raster und daher eine viereckige Form aufweisen. Daher wird man auch für die Kolbenplatte und die Zylinderplatte eine viereckige Form wählen. Vier Anschlagspunkte an den Plattenecken bieten sich dann an, wobei selbstverständlich auch die erwähnten drei möglich sind.

Vorzugsweise werden die Anschläge mit Justiermitteln zur Einstellung der Parallelität der Anschlagspositionen ausgestattet. Dies dient sowohl einer exakten Ersteinstellung als auch eventuellen Nachjustierungen.

Um die Volumeneinstellung möglichst einfach vornehmen zu können, wird vorgeschlagen, daß das Einstellmittel für die Volumeneinstellung derart ausgebildet ist, daß die Anschlagspunkte des verstellbaren Anschlags simultan höhenverstellbar sind. Auf diese Weise kann durch eine einzige Betätigung eine Volumeneinstellung vorgenommen werden, wobei immer eine Parallelität der Platten in den Endpositionen und damit exakte Volumina aller Kolben-Zylinder-Einheiten gewährleistet sind. Dies kann unterschiedlich ausgestaltet sein. Beispielsweise kann vorgesehen sein, daß die Anschlagpunkte durch Schrittmotoren verstellbar sind. Dies läßt sich durch eine sehr einfache Steuerung mit einer einzigen Anzeige realisieren.

Eine andere Möglichkeit besteht darin, daß die simultane Verstellung der Anschlagspunkte mittels eines Getriebes erfolgt. Beispielsweise könnte vorgesehen sein, daß sich die Anschlagspunkte durch Gewindespindeln oder durch auf festen Gewindespindeln drehbaren Einstellmuttern verstellen lassen, welche mittels Zahnriemen und Zahnrädern von einer Stelleinrichtung simultan bewegt werden. Diese Einstellung läßt sich ohne Belastung durch eine an einem Anschlag anliegende Platte vornehmen. Soll der Anschlag bzw. die Anschlagpunkte in Richtung einer anliegenden Platte, z. B. der Kolbenplatte, bewegt werden, so sollte diese zweckmäßigerweise vorher wegbewegt werden, damit Leichtgängigkeit und geringer Kraftaufwand gewährleistet ist. Es sind natürlich auch Maßnahmen möglich, die dies gewährleisten, wie Blockierung der Einstellmittel oder eine selbsttätige Wegbewegung der Platte bei beginnender Betätigung der Einstellmittel für den Anschlag. In der Regel wird eine Bedienperson jedoch von selbst daran erinnert, die Platte wegzubewegen, da die Einstellmittel durch die anliegende Platte blockiert werden oder schwergängig sind. Die Anforderungen an Kraftaufwand und Strapazierfähigkeit sind daher mit den Anforderungen an die Spindelantriebe der Automaten nicht zu vergleichen. Bei der dadurch mit geringen Kräften möglichen Einstellung der Anschläge bzw. Anschlagspunkte bei der erfindungsgemäßen Vorrichtung läßt sich auch mit einfachen Mitteln eine hohe Genauigkeit erzielen. Zweckmäßigerweise ist dann vorgesehen, daß diese Stelleinrichtung eine Anzeigeeinrichtung aufweist, die die eingestellten Volumina anzeigt.

Wesentlich für die Ausgestaltungen der Volumeneinstellung ist, daß die Stellmechanik von allen kräftemäßigen Belastungen, insbesondere von denen, die der Antrieb für den Pipettiervorgang aufbringen muß, befreit ist und daher auf unaufwendige Weise eine hohe Genauigkeit erzielt werden kann.

Da die Vorrichtung vorzugsweise dann verwendet wird, wenn man wesentlich mehr Kolben-Zylinder-Einheiten als bei einer 8- oder 12-Kanal-Pipette braucht, und diese in rasterförmiger Anordnung, beispielsweise mit 96 Einheiten, ausgebildet sind, ist ein Aufsetzen der Vorrichtung auf eine Arbeitsplatte mit ebenso vielen Arbeitspositionen problematisch. Deshalb wird vorgeschlagen, daß die Kolbenplatte, die Zylinderplatte, die Anschläge und der Antrieb in einem Pipettierkopf angeordnet sind, der mittels einer Vertikalführung an einem Ständer aufgehängt ist. Dann ist es weiterhin zweckmäßig, wenn der Ständer eine Positioniereinrichtung für die Positionierung des Pipettierkopfs zu einer der Pipettierung dienenden Arbeitsplatte aufweist, um die Rasteranordnung der Kolben-Zylinder-Einheiten mit der Rasteranordnung der Arbeitspositionen auf der Arbeitsplatte in Übereinstimmung zu bringen. Auf diese Weise ist ein besonders schnelles Arbeiten möglich, ohne daß an die Geschicklichkeit allzu hohe Anforderungen gestellt werden müssen.

Oftmals besteht das Bedürfnis, daß mit mehreren Arbeitsplatten gearbeitet wird. Beispielsweise um eine Flüssigkeit aus einem Reservoir aufzunehmen und sie dann an eine zu bearbeitende Arbeitsplatte wieder abzugeben. Ebenso wäre es denkbar, daß für ein zügiges Arbeiten nacheinander mehrere Flüssigkeitsaufnahmen und -abgaben erfolgen sollen, ohne daß Arbeitsplatten immer wieder ausgewechselt werden müssen. Oftmals müssen auch Flüssigkeitsaufnahmen, beispielsweise Pipettenspitzen, in rasterförmiger Anordnung aufgenommen werden (siehe unten). Danach erfolgt eine Aufnahme einer Flüssigkeit und dann eine Abgabe derselben sowie zum Schluß eine Entfernung der Flüssigkeitsaufnahmen. Dies würde dann die Anordnung von vier Arbeitsplatten erfordern. Dazu ist vorgesehen, daß weitere Positioniereinrichtungen für Arbeitsplatten angeordnet sind, die wahlweise mit der Rasteranordnung der Kolben-Zylinder-Einheiten in Übereinstimmung gebracht werden können.

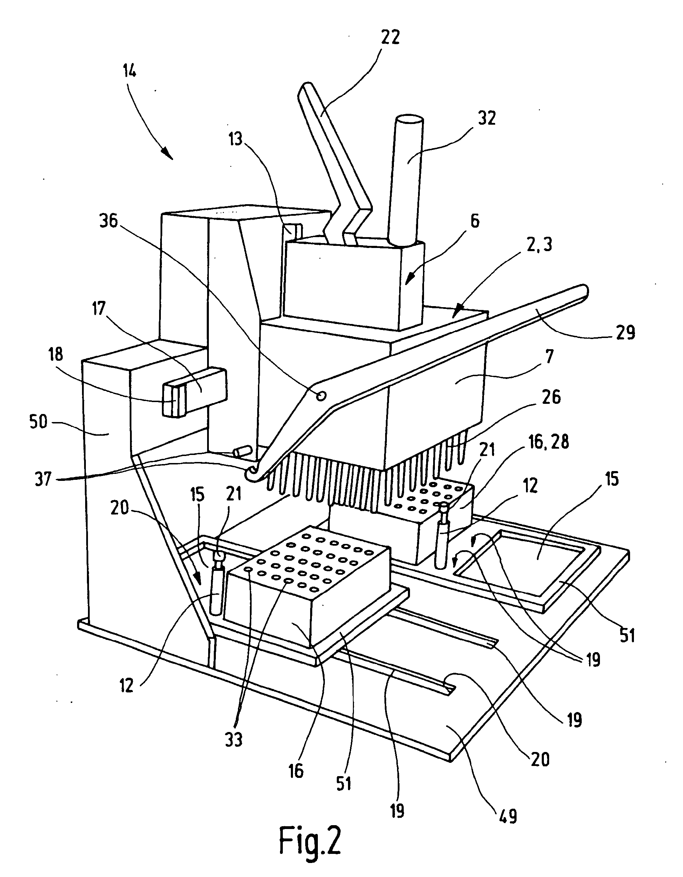

Für die Bereitstellung mehrerer Positioniereinrichtungen für Arbeitsplatten gibt es verschiedene Möglichkeiten. Ein Vorschlag besteht darin, daß die Positioniereinrichtungen auf einer Drehscheibe angebracht sind, um nacheinander mehrere Arbeitsplatten in Rasterübereinstimmung zu bringen. Ein weiterer Vorschlag sieht vor, daß der Ständer eine Horizontalführung für den Pipettierkopf und unter der Horizontalführung nebeneinander mehrere Positioniereinrichtungen für Arbeitsplatten aufweist, wobei Positionierungshilfen zur Zuordnung der Raster an der Horizontalführung vorgesehen sind. Eine weitere Möglichkeit besteht darin, daß mehrere Positioniereinrichtungen für Arbeitsplatten vorgesehen sind, welche mittels mindestens einer Horizontalführung für diese, beispielsweise durch verschiebbare Tabletts, derart zu durch Positionierhilfen definierte Positionen verschiebbar sind, daß dort befindliche Arbeitsplatten dem Raster der Kolben-Zylinder-Einheiten zuordenbar sind. Die letztgenannte Möglichkeit läßt sich mit der vorgenannten auch kombinieren, indem Horizontalführungen für die Arbeitsplatten quer zur Horizontalführung für den Pipettierkopf verlaufen. Beschränkt man sich bei den beiden vorgenannten Ausführungsformen jeweils auf zwei Positionierungen, so kann es sich bei den Positionierungshilfen jeweils um die Endanschläge der Horizontalführungen handeln. Dadurch können die oben genannten, oftmals erforderlichen vier Arbeitsplatten positioniert werden (siehe Fig. 2). Selbstverständlich lassen sich auch weitere Positionen ausführen, wenn zwischen den Anschlägen Rastpositionen eingerichtet werden.

Für die Vertikalbewegung des Pipettierkopfs ist vorzugsweise mindestens ein unterer Anschlag vorgesehen. Dieser dient dazu, bei der Vertikalbewegung nach unten eine Stop-Position einzustellen, in der der gewünschte Pipettiervorgang stattfinden kann, da die richtige Höhenposition für eine Flüssigkeitsaufnahme oder -abgabe im Verhältnis zu den jeweiligen Arbeitsplatten vorgegeben ist. Deshalb ist es auch zweckmäßig, daß der mindestens eine untere Anschlag zur Einstellung der Eintauchtiefe in Flüssigkeitsaufnahmen der Arbeitsplatten einstellbar ist. Befinden sich beispielsweise unter der Horizontalführung für den Pipettierkopf mehrere Arbeitsplatten in Positioniereinrichtungen, so kann natürlich für jede Positioniereinrichtung ein Anschlag vorhanden sein, damit die richtige Höhe über den jeweiligen Arbeitsplatten einstellbar ist.

Für ein leichtes und zügiges Arbeiten wird vorgeschlagen, daß der Vertikalführung des Pipettierkopfs eine Gewichtsausgleichseinrichtung zugeordnet ist, die derart bemessen ist, daß eine leichtgängige Vertikalbewegung unter geringem Kraftaufwand möglich ist. Dabei kann es sich um ein Gegengewicht handeln. Vorzugsweise wird jedoch eine das Gesamtgewicht der Vorrichtung nicht wesentlich erhöhende Feder vorgeschlagen. Besonders geeignet ist dabei eine Spiralfeder, da diese eine nahezu geradlinige Kennlinie aufweist, wodurch der Kraftaufwand für die Vertikalbewegung auf der ganzen Bewegungsbahn gleich ist. Zur Sicherheit kann der Vertikalführung des Pipettierkopfs eine auf eine hohe Beschleunigung ansprechende Fallsperre oder -bremse zugeordnet werden. Dies ist zweckmäßig, um ein Herunterfallen - und dadurch entstehende Unfälle - zu vermeiden, die verursacht werden können, wenn beispielsweise die Feder einmal brechen sollte. Es könnte auch eine hydraulische oder pneumatische Fallsperre oder-bremse, beispielsweise eine pneumatische Feder Verwendung finden.

Weiterhin ist es für ein leichtes Arbeiten zweckmäßig, wenn die Antriebsmechanik für die Kolben-Zylinder-Einheiten durch einen Handhebel mit Übersetzung betätigbar ist. Es kann sich dabei um eine entsprechende Hebelübersetzung oder um eine Zahnrad- bzw. Zahnstangenübersetzung oder eine Kombination dieser Elemente handeln. Weitere Möglichkeiten sind selbstverständlich denkbar.

Da die Zylinderplatte zweckmäßigerweise in einer bestimmten Höhe zu den Arbeitsplatten positioniert werden sollte, um Flüssigkeiten aufzunehmen bzw. abzugeben, ist es zweckmäßig, wenn es sich bei der bewegten Platte um die Kolbenplatte handelt, so daß der Antrieb vorzugsweise der Kolbenplatte zugeordnet wird. Es kann dann vorgesehen sein, daß der Antrieb die Kolbenplatte in ihre untere Anschlagposition verbringt und Rückstellfeldern sie in die obere Anschlagsposition zurückführen. Dies ermöglicht ein besonders einfaches Arbeiten und verhindert, daß die Kolbenplatte in einer undefinierten Position verweilen kann.

Die Kolben können gegenüber den Zylindern mittels Dichtungen abgedichtet sein. Dies hat den Vorteil, daß keine so hohen Genauigkeitsanforderungen bezüglich Kolben und Zylindern bestehen, die Dichtigkeit in hohem Maß garantiert ist und gewisse Unparallelitäten der Platten während der Verstellung möglich sind, ohne daß es zu einem Verklemmen kommen kann. Die Dichtungen können als an den Kolben angeordnete Dichtringe ausgebildet sein. Es kann aber auch vorgesehen sein, daß die Zylinderplatte in horizontaler Richtung geteilt ist und elastisches Dichtmaterial derart eingelagert ist, daß durch Mittel zur Zusammenpressung der Plattenteile die Zylinderdurchmesser an den Dichtstellen einstellbar sind, wobei die Kolben sich im Bereich der Dichtstellen bewegen. Bei dem Dichtmaterial kann es sich dabei um eine Lochplatte aus elastischem Material handeln, oder es kann jedem einzelnen Zylinder ein ringförmiges elastisches Dichtelement zugeordnet werden. Der Vorteil dieser Ausgestaltung besteht darin, daß die Anlage der Dichtungen an die Kolben ein - und nachstellbar ist.

Die Zylinder können unmittelbar mit Ansaugöffnungen ausgestattet sein, oder es ist möglich, daß am unteren Ende der Zylinder Aufnahmen für das Aufstecken von Flüssigkeitsaufnahmen, insbesondere von Pipettenspitzen, angeordnet sind. Dadurch werden nur diese von den Flüssigkeiten benetzt und die Kolben-Zylinder-Einheiten dienen als Ansaugvorrichtungen, die den für die Ansaugung entsprechenden Unterdruck erzeugen, sowie durch die Abwärtsbewegung die in den Flüssigkeitsaufnahmen befindliche Flüssigkeit ausblasen. Auf diese Weise braucht nach einem Arbeitsgang oder vor einem Wechsel der zu pipettierenden Flüssigkeit lediglich ein Austausch der Flüssigkeitsaufnahmen erfolgen. Die Aufnahmen für die Flüssigkeitsaufnahmen, also beispielsweise Röhrchen oder Pipettenspitzen, können mit elastischen Ringen versehen sein, damit ein sicherer Halt und dichter Sitz gewährleistet ist, auch wenn die Flüssigkeitsaufnahmen oder Pipettenspitzen Durchmesserungenauigkeiten aufweisen.

Um solche Flüssigkeitsaufnahmen beziehungsweise Pipettenspitzen in größerer Anzahl, beispielsweise das gesamte Raster, auf einmal aufnehmen zu können, ist eine gewisse Kraft erforderlich. Daher wird vorgeschlagen, daß eine Kraftübersetzung vorgesehen ist, welche den Pipettierkopf zur Aufnahme der Flüssigkeitsaufnahme, insbesondere der Pipettenspitzen, gegen einen in einer Positioniereinrichtung befindlichen Flüssigkeitsaufnahmenträger, insbesondere Pipettenspitzenträger, oder umgekehrt, drückt. Die Kraftübersetzung kann beispielsweise ein Übersetzungshebel sein, der zwischen dem Ständer und dem Pipettierkopf wirkend, letzteren gegen den Flüssigkeitsaufnahmeträger, insbesondere Pipettenspitzenträger, drückt. Durch eine solche Kraftübersetzung ist es nicht erforderlich, den Antrieb für die Pipettierung dafür heranzuziehen, so daß dieser nicht für so hohe Kräfte ausgelegt werden muß.

Weiterhin ist es zweckmäßig, wenn ein Flüssigkeitsaufnahmen- oder Pipettenspitzenabstreifer vorgesehen ist. Bei diesem kann es sich um eine hebelbetätigte, unterhalb der Zylinderplatte angeordnete, vertikal verschiebbare Lochplatte handeln. Dabei müssen die Löcher größer sein als die Aufnahmen, jedoch kleiner als die der Flüssigkeitsaufnahmen oder Pipettenspitzen, um diese von den Aufnahmen abstreifen zu können.

Für die Handhabung derartiger Flüssigkeitsaufnahmen, wie Pipettenspitzen, ist es zweckmäßig, wenn Restbestände an Flüssigkeit ausgeblasen werden können. Dazu wird vorgeschlagen, daß der untere Anschlag als Raste ausgebildet ist, welche den für die Bestimmung der Volumina maßgeblichen Hub definiert, indem sie die Platte parallel ausrichtet. Danach ist die bewegte Platte unter Überwindung der Haltekraft oder unter Betätigung einer Entklinkung der Raste noch ein Stück weiterbewegbar, um eventuell zurückgebliebene Flüssigkeitsreste auszublasen.

Eine Weiterbildung der Vorrichtung sieht noch vor, daß für eine portionsweise Abgabe der aufgenommenen Flüssigkeit zwischen den oberen und unteren Anschlägen mindestens ein rastenartiger Zwischenanschlag angeordnet ist, der ebenfalls eine parallele Ausrichtung der Platten bewirkt und mit erhöhter Kraft oder unter Betätigung einer Entklinkung überwindbar ist. Ein oder mehrere derartige Zwischenanschläge dienen dem Zweck, daß nach einer einzigen Flüssigkeitsaufnahme definierte Volumina dieser Flüssigkeit nacheinander an zwei oder mehrere Arbeitsplatten abgegeben werden können. Auf diese Weise läßt es sich rationeller arbeiten, wenn mehrere Arbeitsplatten mit derselben Flüssigkeit versorgt werden sollen. Selbstverständlich sollte auch dieser mindestens eine rastenartige Zwischenanschlag einstellbar sein, daß auch bezüglich der nacheinander abgegebenen Flüssigkeit die Volumina genau bestimmbar sind.

Die Erfindung wird nachfolgend anhand eines in der Zeichnung dargestellten Ausführungsbeispiels erläutert. Es zeigen
- **Fig. 1**: den Funktionsaufbau der erfindungsgemäßen Vorrichtung,
- **Fig. 2**: die Anordnung der erfindungsgemäßen Vorrichtung an einem Ständer mittels eines Pipettierkopfes und
- **Fig. 3**: eine mögliche Antriebsmechanik für den Pipettiervorgang.

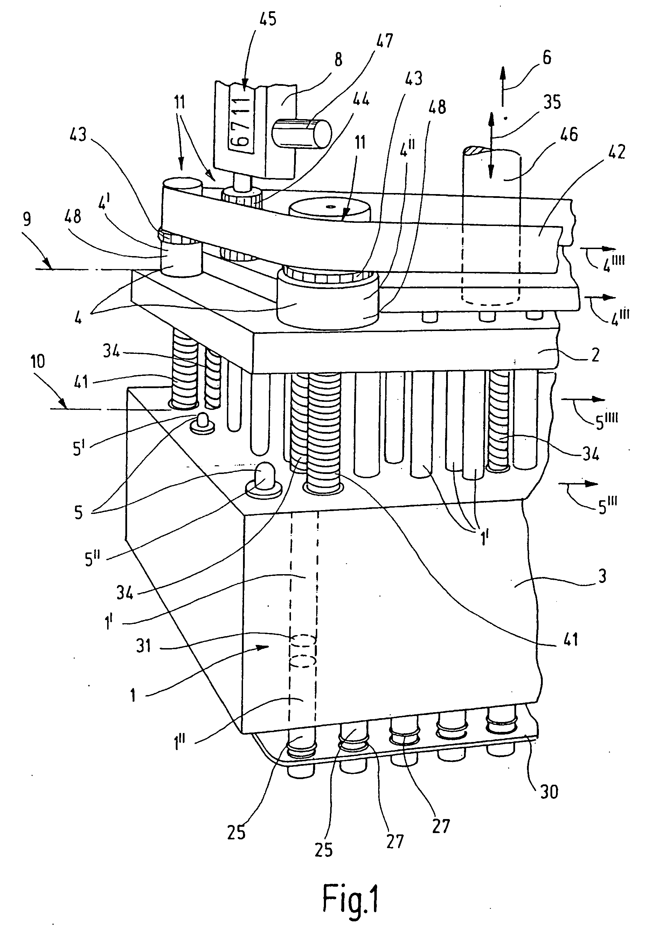

**Fig. 1** zeigt den Funktionsaufbau eines Ausführungsbeispiels der erfindungsgemäßen Vorrichtung. Kolben-Zylinder-Einheiten 1 sind hier dadurch rasterförmig angeordnet, daß sich Kolben 1' an einer Kolbenplatte 2 und Zylinder 1" an einer Zylinderplatte 3 befinden. Die Zylinder 1" werden beim dargestellten Ausführungsbeispiel dadurch gebildet, daß die Zylinderplatte 3 mit entsprechenden Bohrungen versehen ist. Auf diese Weise wird durch eine Bewegung der Kolbenplatte 2 nach oben eine Einsaugbewegung erzeugt und bei einer Bewegung der Kolbenplatte 2 nach unten eine Ausstoßbewegung. Damit die Kolben 1' gegenüber den Zylindern 1" dicht sind, können sie jeweils mit einem Dichtring 31 versehen sein. Bei der Darstellung ist eine Kolben-Zylinder-Einheit 1 mit Kolben 1', Dichtring 31 und Zylinder 1" beispielhaft gestrichelt eingezeichnet. Tatsächlich ist eine Vielzahl derartiger Einheiten 1 vorgesehen, wozu eine rasterförmige Anordnung gewählt ist. Entsprechend üblicher Arbeitsplatten 16 kann beispielsweise ein Raster von 96 Kolben-Zylinder-Einheiten 1 gewählt werden, um die Arbeitspositionen auf diesen Arbeitsplatten 16 zu bedienen. Selbstverständlich können auch andere Raster vorgesehen sein.

Eine Stellbewegung 35 eines Antriebs 6, von dem hier nur die Antriebsstange 46 gezeichnet ist, bewegt die Kolbenplatte 2 in eine untere Anschlagsposition 10. In dieser Position sind die Kolben-Zylinder-Einheiten 1 für eine Einsaugung einer Flüssigkeit bereit. Der Antrieb 6 braucht jetzt nur deaktiviert oder eine nicht dargestellte Verriegelung entsichert zu werden, damit Rückstellfedern 34 die Kolbenplatte 2 wieder nach oben bewegen bis zu einer oberen Anschlagsposition 9. Der Bewegungsverlauf kann durch entsprechende Maßnahmen in wiederholbarer Weise vorgegeben werden. In dieser Position 9 ist eine Flüssigkeit eingesaugt. Wird die Kolbenplatte 2 dann wieder nach unten bewegt, wird die Flüssigkeit wieder ausgestoßen.

Das Wesen der Erfindung besteht darin, daß exakte Positionierungen der Kolbenplatte 2 im Verhältnis zur Zylinderplatte 3 in der oberen Anschlagsposition 9 und der unteren Anschlagsposition 10 dafür sorgen, daß die Volumina, welche von allen Kolben-Zylinder-Einheiten 1 angesaugt und abgegeben werden, exakt gleich ist. Zu diesem Zweck dient ein oberer Anschlag 4 und ein unterer Anschlag 5. Um eine möglichst exakte Positionierung der Kolbenplatte 2 zu erhalten, bestehen die Anschläge 4 und 5 jeweils aus Anschlagpunkten 4', 4", 4"' und 4"" bzw. aus Anschlagpunkten 5', 5", 5"' und 5"", die in den äußeren Bereichen der Kolbenplatte 2 anschlagen und dadurch für eine gute parallele Ausrichtung derselben sorgen. (Da die Darstellung abgebrochen ist, sind die entsprechend angeordneten Anschlagpunkte 4"', 4"", 5"', 5"" nicht eingezeichnet, die Pfeile verweisen auf ihre Lage.) Die unteren Anschlagpunkte 5', 5", 5'" und 5"" sind lediglich justierbar, um eine exakte Parallelausrichtung der Kolbenplatte 2 in der unteren Anschlagsposition 10 zu erzielen. Diese Anschlagpunkte 5', 5", 5'" und 5"" können auch derart ausgestaltet sein, daß sie in der gezeichneten Anschlagsposition 10 den Anschlag 5 bilden, jedoch unter erhöhter Kraft weiter nach unten gedrückt werden können, um die oben bereits erwähnte zusätzliche Ausblasfunktion zu erzielen, um also anhaftende Flüssigkeitsreste zu entfernen.

Dagegen sind die oberen Anschlagspunkte 4', 4", 4"' und 4"" nicht nur justierbar, sondern gleichzeitig auch verstellbar, um die aufzunehmenden und abzugebenden Volumina einstellen zu können. Dieser Einstellung dient ein Getriebe 11, das für eine simultane Anschlageinstellung bezüglich der Anschlagpunkte 4', 4", 4"' und 4"" sorgt. Dieses Getriebe 11 besteht aus einem Einstellmittel 8 mit einem Einstellrad 47, durch welches ein Antriebsrad 44 antreibbar ist. Entsprechend der Drehung am Einstellrad 47 wird das eingestellte Volumen an der Volumenanzeige 45 angezeigt. Über das Einstellrad 47 treibt das Antriebsrad 44 einen Zahnriemen 42, der wiederum Treibräder 43 simultan antreibt. Diese Treibräder 43 sind mit Einstellmuttern 48, die auf den Gewindespindeln 41 gelagert sind, verbunden, so daß sich diese in ihrer Höhe simultan verstellen. Diese Einstellmuttern 48 bilden an ihrem unteren Ende die Anschlagpunkte 4', 4", 4"' und 4"", so daß auf diese Weise alle Anschlagpunkte 4', 4", 4"' und 4"" simultan verstellbar sind und bei jeder Einstellung eine bezüglich der Kolbenplatte 2 im Verhältnis zur Zylinderplatte 3 exakt flächenparallele obere Anschlagposition 9 gewährleistet ist. Alternativ kann auch ein Treibrad 43 als Antriebsrad 44 dienen.

Damit die Kolben-Zylinder-Einheiten 1 nicht verschmutzen, ist es zweckmäßig, wenn diese lediglich Luft ansaugen und ausstoßen und die Flüssigkeit nicht in die Zylinder 1" gelangt. Zu diesem Zweck sind am unteren Ende der Zylinder 1" Aufnahmen 25 angeordnet, auf die Flüssigkeitsaufnahmen aufsteckbar sind. Als solche dienen vorzugsweise Pipettenspitzen 26. Für die Aufnahme solcher Pipettenspitzen 26 wird die dargestellte Einheit exakt über einen Pipettenspitzenträger 28 gebracht. Wird dann die dargestellte Einheit nach unten bewegt, so nimmt sie mit den Aufnahmen 25 die in dem Pipettenspitzenträger 28 befindlichen Pipettenspitzen 26 auf. Werden andere Flüssigkeitsaufnahmen verwendet, so findet dieser Vorgang entsprechend statt. Um einen sicheren Halt auf den Aufnahmen 25 zu gewährleisten, sind elastische Ringe 27 angeordnet, welche auch geringe Maßunterschiede derart ausgleichen, daß immer die erforderliche Haltekraft vorhanden ist.

Dargestellt ist weiterhin ein als Lochplatte ausgebildeter Flüssigkeitsaufnahmen- oder Pipettenspitzenabstreifer 30, welcher in einer Position unterhalb der elastischen Ringe 27 gezeichnet ist, das bedeutet, daß Pipettenspitzen 26 abgestreift wurden. Zur Aufnahme der Pipettenspitzen 26 wird der Pipettenspitzenabstreifer 30 nach oben bewegt, beispielsweise bis er an die Zylinderplatte 3 anschlägt. Dann können die Pipettenspitzen 26 auf die Aufnahmen 25 gesteckt werden und finden an den elastischen Ringen 27 Halt, da sie einen geringfügig kleineren Durchmesser als letztere aufweisen. Bewegt sich der Pipettenspitzenabstreifer 30 wieder in die gezeichnete Position, so werden die Pipettenspitzen 26 abgestreift und fallen beispielsweise in einen dafür bereitgestellten Träger. Für diese Abstreiffunktion müssen die Löcher der Lochplatte größer sein als die Aufnahmen 25, einschließlich der elastischen Ringe 27, jedoch kleiner als die Durchmesser der Pipettenspitzen 26.

Fig. 2 zeigt die Anordnung der in Fig. 1 dargestellten Vorrichtung an einem Ständer 14. Die in Fig. 1 dargestellte Vorrichtung befindet sich in einem Pipettierkopf 7, wobei über dem Pipettierkopf 7 eine Antriebsmechanik 6 für den Pipettiervorgang angeordnet ist, die per Hand mittels eines schwenkbaren Handhebels 22 und eines festen Haltegriffs 32 betätigbar ist. Der Ständer 14 besteht aus einer Grundplatte 49 und einem Aufbau 50, an dem der Pipettierkopf 7 mittels einer Vertikalführung 13 angeordnet ist. In dieser Vertikalführung 13 kann der Pipettierkopf 7 derart verschoben werden, daß Flüssigkeitsaufnahmen wie Pipettenspitzen 26 von einem Flüssigkeitsaufnahmen- oder Pipettenspitzenträger 28 aufgenommen werden können, daß auch Flüssigkeit in die Pipettenspitzen 26 eingesaugt werden kann und daß diese Flüssigkeit wiederum an eine andere Arbeitsplatte 16 abgegeben werden kann, auf der sich Arbeitspositionen 33 befinden, beispielsweise Vertiefungen, in die die Flüssigkeit gegeben wird. Um für diese Vorgänge eine richtige Höhenpositionierung zu erzielen, sind untere Anschläge 12 für den Pipettierkopf 7 vorgesehen, welche mittels Justierschrauben 21 entsprechend den jeweiligen Bedürfnissen in der Höhe eingestellt werden können. Die Anschläge 12 sind entsprechend der Positioniereinrichtungen 15 dort positionierbaren Arbeitsplatten 16 zugeordnet und können auf diese eingestellt werden.

Weiterhin ist eine Horizontalführung 17 für den Pipettierkopf 7 vorgesehen, um ihn zwischen den zwei gezeichneten, mittels der Positioniereinrichtungen 15 positionierten Arbeitsplatten 16 verfahren zu können. Damit die Raster übereinstimmen, sind an beiden Enden der Horizontalführung 17 Positionierungshilfen 18, als Anschläge ausgebildet.

Um mit noch mehr Arbeitsplatten 16 arbeiten zu können, sind auf der Grundplatte 49 mittels Horizontalführungen 19 zwei verschiebbare Tabletts 51 angeordnet, welche jeweils zwei Positioniereinrichtungen 15 für Arbeitsplatten 16 enthalten. Bei diesen Positioniereinrichtungen 15 kann es sich beispielsweise um Vertiefungen handeln, in die die Arbeitsplatten 16 exakt hineinpassen. Die Tabletts 51 sind auf den Horizontalführungen 19 jeweils zwischen zwei Anschlägen 20 verschiebbar, die an den Enden dieser Horizontalführungen 19 derart angeordnet sind, daß jede Endposition eine exakte Rasterübereinstimmung zwischen einer Arbeitsplatte 16 in der Positioniereinrichtung 15 und dem Pipettierkopf 7 herstellt. Selbstverständlich sind auch verstellbare Positioniereinrichtungen 15 für die Positionierung verschiedener Größen von Arbeitsplatten 16 möglich. Für verschiedene Raster können auch die Platten 2, 3 beziehungsweise der Pipettierkopf 7 auswechselbar und die Positionierungshilfen 18, 20 verstellbar sein.

Da für die Aufnahme von Pipettenspitzen 26 oder anderer Flüssigkeitsaufnahmen auf die Aufnahmen 25 ein erhöhter Kraftaufwand erforderlich ist, insbesondere wenn zahlreiche Pipettenspitzen, beispielsweise ein Raster von 96 Spitzen, aufgenommen werden sollen, ist ein Übersetzungshebel 29 vorgesehen. Dieser Übersetzungshebel 29 ist durch eine Anlenkung 36 schwenkbar am Pipettierkopf 7 angeordnet und hat eine Abstützung 37, in die das Ende des Übersetzungshebels 29 eingreift, um den Pipettierkopf 7 mit verstärkter Kraft nach unten zu drücken, damit die Aufnahmen 25 das gesamte Raster von Pipettenspitzen 26 aufnehmen. Selbstverständlich kann der einseitig gezeichnete Übersetzungshebel 29 auch beidseitig des Pipettierkopfs 7 angeordnet sein, wobei dann eine Querstange an den Enden für eine gemeinsame Betätigung sorgt.

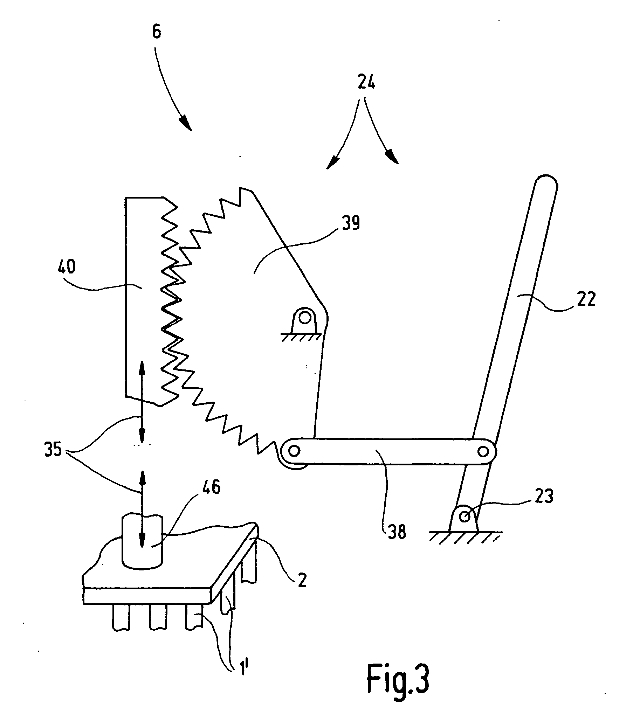

Fig. 3 zeigt eine mögliche Antriebsmechanik 6 für den Pipettiervorgang. Dabei ist der Handhebel 22 mittels einer Anlenkung 23 am Pipettierkopf 7 angelenkt und überträgt mittels einer Übertragungsstange 38 die Schwenkbewegung auf ein Zahnrad 39, das auch als Zahnradsegment ausgebildet sein kann. Dieses greift in eine Zahnstange 40 ein, welche mit der Antriebsstange 46, die bereist in Fig. 1 eingezeichnet ist, verbunden ist. Der Doppelpfeil 35 zeigt die Stellbewegung auf die Kolbenplatte 2, die hier nur andeutungsweise gezeichnet ist. Auf diese Weise wird eine entsprechende Übersetzung 24 zwischen dem Handhebel 22 und der Stellbewegung 35 der Kolbenplatte 2 erzielt.

Die Darstellung zeigt natürlich lediglich eine mögliche Ausführungsform der Erfindung. Eine solche könnte auch einfacher aufgebaut werden, beispielsweise als eine Vorrichtung, wie sie in Fig. 1 dargestellt ist und die ohne den Ständer 14 mittels eines entsprechenden Aufsatzes über eine Arbeitsplatte 16 bringbar ist. Möglich wäre es weiterhin, den Anschlag 4, oder auch den Anschlag 5 durch Schrittmotoren einzustellen, oder einen einfachen Motorantrieb statt der Handhebelbetätigung vorzusehen. Selbstverständlich könnte statt der Kolbenplatten 2 auch die Zylinderplatte 3 bewegt werden, dann wäre es allerdings notwendig, daß auch eine zu bedienende Arbeitsplatte 16 mitbewegt wird, um den richtigen Arbeitsabstand beizubehalten. Eine weitere Ausgestaltung könnte auch vorsehen, daß zwischen den Anschlägen 4 und 5 Zwischenanschläge vorgesehen sind, welche rastenartig einrasten und dem Zweck dienen, daß aufgenommene Flüssigkeit in mehreren Portionen nacheinander abgegeben werden kann. Weitere Modifikationen sind denkbar.

### Vorrichtung zur Aufnahme und Abgabe von Flüssigkeiten

### Bezugszeichenliste

- 1: Kolben-Zylinder-Einheit
- 1': Kolben
- 1": Zylinder
- 2: Kolbenplatte
- 3: Zylinderplatte
- 4: oberer Anschlag (justier- und verstellbar)
- 4', 4", 4"', 4"": Anschlagpunkte des oberen Anschlags
- 5: unterer Anschlag (justierbar)
- 5', 5", 5"', 5"": Anschlagpunkte des unteren Anschlags
- 6: Antriebsmechanik für Pipettiervorgang
- 7: Pipettierkopf
- 8: Einstellmittel für Anschlag
- 9: obere Anschlagsposition
- 10: untere Anschlagsposition
- 11: Getriebe für simultane Anschlageinstellung
- 12: unterer Anschlag für Pipettierkopf
- 13: Vertikalführung des Pipettierkopfs
- 14: Ständer
- 15: Positioniereinrichtungen für Arbeitsplatten
- 16: Arbeitsplatten
- 17: Horizontalführung des Pipettierkopfs
- 18: Positionierungshilfen für Pipettierkopf (z. B. Anschläge)
- 19: Horizontalführung für Positioniereinrichtungen für Arbeitsplatten
- 20: Positionierungshilfen für Positioniereinrichtungen (z. B. Anschläge)
- 21: Justierschraube
- 22: Handhebel
- 23: Anlenkung des Handhebels
- 24: Übersetzung
- 25: Aufnahmen
- 26: Pipettenspitzen
- 27: elastische Ringe
- 28: Flüssigkeitsaufnahmen- oder Pipettenspitzenträger
- 29: Übersetzungshebel
- 30: Flüssigkeitsaufnahmen- oder Pipettenspitzenabstreifer
- 31: Dichtring
- 32: Haltegriff
- 33: Arbeitspositionen auf den Arbeitsplatten
- 34: Rückstellfedern
- 35: Stellbewegung für Pipettierung
- 36: Anlenkung des Übersetzungshebels am Pipettierkopf
- 37: Abstützung des Übersetzungshebels am Ständer
- 38: Übertragungsstange
- 39: Zahnrad oder Zahnsegment
- 40: Zahnstange
- 41: Gewindespindeln
- 42: Zahnriemen
- 43: Treibräder
- 44: Antriebsrad
- 45: Volumenanzeige
- 46: Antriebsstange
- 47: Einstellrad
- 48: Einstellmuttern
- 49: Grundplatte
- 50: Aufbau
- 51: Tablett

## Patentansprüche

1. Vorrichtung zur Aufnahme und Abgabe von Flüssigkeiten mit einer Vielzahl von Kolben-Zylinder-Einheiten (1, 1', 1"), jeweils angeordnet an einer Kolbenplatte (2) und einer Zylinderplatte (3), wobei die Flüssigkeitsaufnahme und -abgabe durch eine Verschiebung der Kolben (1') in den Zylindern (1") mittels einer Abstandsänderung der Platten (2, 3) durch eine Antriebsmechanik (6) und eine Plattenführung senkrecht zu den Plattenebenen erfolgt, wobei das Volumen durch einen oberen (4) und einen unteren (5) Anschlag, von denen mindestens einer mittels mindestens eines Einstellmittels (8) einstellbar ist, bestimmt werden kann,
**dadurch gekennzeichnet,**
**daß** bei geringen Anforderungen an die Flächenparallelität der Plattenebenen während der Bewegung in der Plattenführung gleiche Aufnahme- und Abgabevolumina der Kolben-Zylinder-Einheiten (1, 1', 1") **dadurch** gewährleistet sind, daß die Anschläge (4, 5) derart ausgebildet und angeordnet sind, daß die Parallelität der Platten (2, 3) in der oberen (9) und der unteren (10) Anschlagposition mittels der Anschläge (4, 5) erzielt ist.

2. Vorrichtung nach Anspruch 1,
**dadurch gekennzeichnet,**
**daß** jeder der Anschläge (4, 5) mindestens drei Anschlagpunkte (4', 4", 4"', 4"" und 5', 5", 5'", 5"") aufweist, die im äußeren Flächenbereich der bewegten Platte (2 und/ oder 3) anschlagen.

3. Vorrichtung nach Anspruch 1 und 2,
**dadurch gekennzeichnet,**
**daß** die Anschläge (4, 5) mit Justiermitteln zur Einstellung der Parallelität der Anschlagspositionen (9, 10) ausgestattet sind.

4. Vorrichtung nach Anspruch 2 oder 3,
**dadurch gekennzeichnet,**
**daß** das Einstellmittel (8) für die Volumeneinstellung derart ausgebildet ist, daß die Anschlagpunkte (4', 4", 4"', 4"" und /oder 5', 5", 5"', 5"") des verstellbaren Anschlags (4 und/oder 5) simultan höhenverstellbar sind.

5. Vorrichtung nach Anspruch 4,
**dadurch gekennzeichnet,**
**daß** die Anschlagpunkte (4', 4", 4"', 4"" und/oder 5', 5", 5'", 5"") durch Schrittmotoren verstellbar sind.

6. Vorrichtung nach Anspruch 4,
**dadurch gekennzeichnet,**
**daß** die simultane Verstellung der Anschlagpunkte (4', 4", 4"', 4"" und/oder 5', 5", 5"', 5"") mittels eines Getriebes (11) erfolgt.

7. Vorrichtung nach einem der Ansprüche 1 bis 6,
**dadurch gekennzeichnet,**
**daß** die Kolbenplatte (2), die Zylinderplatte (3) und die Anschläge (4, 5) in einem Pipettierkopf (7) angeordnet sind, der mittels einer Vertikalführung (13) an einem Ständer (14) aufgehängt ist.

8. Vorrichtung nach Anspruch 7,
**dadurch gekennzeichnet,**
**daß** der Ständer (14) eine Positioniereinrichtung (15) für die Positionierung des Pipettierkopfs (7) zu einer der Pipettierung dienenden Arbeitsplatte (16) aufweist, um die Rasteranordnung der Kolben-Zylinder-Einheiten (1, 1', 1") mit der Rasteranordnung der Arbeitspositionen (33) auf der Arbeitsplatte (16) in Übereinstimmung zu bringen.

9. Vorrichtung nach Anspruch 8,
**dadurch gekennzeichnet,**
**daß** weitere Positioniereinrichtungen (15) für Arbeitsplatten (16) vorgesehen sind, die wahlweise mit der Rasteranordnung der Kolben-Zylinder-Einheiten (1, 1', 1") in Übereinstimmung gebracht werden können.

10. Vorrichtung nach Anspruch 9,
**dadurch gekennzeichnet,**
**daß** die Positioniereinrichtungen (15) auf einer Drehscheibe angebracht sind.

11. Vorrichtung nach Anspruch 9,
**dadurch gekennzeichnet,**
**daß** der Ständer (14) eine Horizontalführung (17) für den Pipettierkopf (7) und unter der Horizontalführung (17) nebeneinander mehrere Positioniereinrichtungen (15) für Arbeitsplatten (16) sowie Positionierungshilfen (18) zur Zuordnung der Raster aufweist.

12. Vorrichtung nach einem der Ansprüche 9 oder 11,
**dadurch gekennzeichnet,**
**daß** mehrere Positioniereinrichtungen (15) für Arbeitsplatten (16) vorgesehen sind, welche mittels mindestens einer Horizontalführung (19) für diese derart zu durch Positionierhilfen (20) definierten Positionen verschiebbar sind, daß dort befindliche Arbeitsplatten (16) dem Raster der Kolben-Zylinder-Einheiten (1, 1', 1") zuordenbar sind.

13. Vorrichtung nach einem der Ansprüche 7 bis 12,
**dadurch gekennzeichnet,**
**daß** für die Vertikalbewegung des Pipettierkopfs (7) mindestens ein unterer Anschlag (12) vorgesehen ist.

14. Vorrichtung nach Anspruch 13,
**dadurch gekennzeichnet,**
**daß** der mindestens eine untere Anschlag (12) zur Einstellung der Eintauchtiefe in Flüssigkeitsaufnahmen der Arbeitsplatten (16) einstellbar ist.

15. Vorrichtung nach Anspruch 13 oder 14,
**dadurch gekennzeichnet,**
**daß** jeder Positioniereinrichtung (15) für eine Arbeitsplatte (16) ein Anschlag (12) zugeordnet ist.

16. Vorrichtung nach einem der Ansprüche 7 bis 15,
**dadurch gekennzeichnet,**
**daß** der Vertikalführung (13) des Pipettierkopfs (7) eine Gewichtsausgleichseinrichtung zugeordnet ist, die derart bemessen ist, daß eine leichtgängige Vertikalbewegung unter geringem Kraftaufwand möglich ist.

17. Vorrichtung nach Anspruch 16,
**dadurch gekennzeichnet,**
**daß** der Vertikalführung (13) des Pipettierkopfs (7) eine auf eine hohe Beschleunigung ansprechende Fallsperre zugeordnet ist.

18. Vorrichtung nach einem der Ansprüche 1 bis 17,
**dadurch gekennzeichnet,**
**daß** die Antriebsmechanik (6) für die Kolben-Zylinder-Einheiten (1, 1', 1") durch einen Handhebel (23) mit Übersetzung (24) betätigbar ist.

19. Vorrichtung nach einem der Ansprüche 1 bis 18,
**dadurch gekennzeichnet,**
**daß** der Antrieb (6) auf die Kolbenplatte (2) wirkt.

20. Vorrichtung nach Anspruch 19,
**dadurch gekennzeichnet,**
**daß** der Antrieb (6) die Kolbenplatte (2) in ihre untere Anschlagsposition (10) verbringt und Rückstellfedern (34) sie in die obere Anschlagsposition (9) zurückbefördern.

21. Vorrichtung nach einem der Ansprüche 1 bis 20,
**dadurch gekennzeichnet,**
**daß** die Kolben (1') gegenüber den Zylindern (1") mittels Dichtungen (31) abgedichtet sind.

22. Vorrichtung nach Anspruch 21,
**dadurch gekennzeichnet,**
**daß** die Zylinderplatte (3) in horizontaler Richtung geteilt ist und elastisches Dichtmaterial derart eingelagert ist, daß durch Mittel zur Zusammenpressung der Plattenteile die Zylinderdurchmesser an den Dichtstellen einstellbar sind, wobei die Kolben (1') sich im Bereich der Dichtstellen bewegen.

23. Vorrichtung nach einem der Ansprüche 1 bis 22,
**dadurch gekennzeichnet,**
**daß** am unteren Ende der Zylinder (1") Aufnahmen (25) für das Aufstecken von Flüssigkeitsaufnahmen, insbesondere Pipettenspitzen (26), angeordnet sind.

24. Vorrichtung nach Anspruch 23,
**dadurch gekennzeichnet,**
**daß** die Aufnahmen (25) für die Flüssigkeitsaufnahmen mit elastischen Ringen (27) versehen sind.

25. Vorrichtung nach Anspruch 23 oder 24,
**dadurch gekennzeichnet,**
**daß** eine Kraftübersetzung vorgesehen ist, welche den Pipettierkopf (7) zur Aufnahme der Flüssigkeitsaufnahmen, insbesondere der Pipettenspitzen (26) gegen einen in einer Positioniereinrichtung (15) befindlichen Flüssigkeitsaufnahmenträger, insbesondere Pipettenspitzenträger (28), oder umgekehrt drückt.

26. Vorrichtung nach Anspruch 25,
**dadurch gekennzeichnet,**
**daß** die Kraftübersetzung ein Übersetzungshebel (29) ist, der, zwischen dem Ständer (14) und dem Pipettierkopf (7) wirkend, letzteren gegen den Flüssigkeitsaufnahmenträger, insbesondere Pipettenspitzenträger (28) drückt.

27. Vorrichtung nach einem der Ansprüche 23 bis 26,
**dadurch gekennzeichnet,**
**daß** ein Flüssigkeitsaufnahmen- oder Pipettenspitzenabstreifer (30) vorgesehen ist.

28. Vorrichtung nach Anspruch 27,
**dadurch gekennzeichnet,**
**daß** der Flüssigkeitsaufnahmen- oder Pipettenspitzenabstreifer (30) eine hebelbetätigte, unterhalb der Zylinderplatte (3) angeordnete, vertikal verschiebbare Lochplatte ist, deren Löcher größer als die der Aufnahmen (25), jedoch kleiner als die der Flüssigkeitsaufnahmen oder Pipettenspitzen (26) sind.

29. Vorrichtung nach einem der Ansprüche 1 bis 28,
**dadurch gekennzeichnet,**
**daß** der untere Anschlag (5, 5', 5", 5"', 5"") als Raste ausgebildet ist, derart, daß sich die bewegte Platte (2, 3) unter Überwindung einer die Anschlagposition (10) des Anschlags (5, 5', 5", 5"', 5"") bildenden Haltekraft oder unter Betätigung einer Entklinkung noch ein Stück weiterbewegen läßt, um zurückgebliebene Flüssigkeitsreste auszublasen.

30. Vorrichtung nach einem der Ansprüche 1 bis 29,
**dadurch gekennzeichnet,**
**daß** für eine portionsweise Abgabe der aufgenommenen Flüssigkeit zwischen den oberen (4, 4', 4", 4"', 4"") und unteren Anschlägen (5, 5', 5", 5"', 5"") mindestens ein einstellbarer rastenartiger Zwischenanschlag angeordnet ist, der ebenfalls eine parallele Ausrichtung der Platten (2, 3) bewirkt und mit erhöhter Kraft oder unter Betätigung einer Entklinkung überwindbar ist.

## Claims

1. Device for receiving and dispensing liquids with a plurality of piston-cylinder units (1, 1', 1") which are disposed on a piston plate (2) and a cylinder plate (3), respectively, wherein liquids are received and dispensed by displacing the pistons (1') in the cylinders (1") to change the distance between the plates (2, 3) using a drive mechanism (6) and a plate guidance perpendicularly to the plate planes, wherein the volume can be determined by an upper (4) and a lower (5) stop, at least one of which can be adjusted using at least one adjusting means (8), **characterized by** guaranteeing identical receiving and dispensing volumes of the piston-cylinder units (1, 1', 1") with low demands with regard to surface parallelism of the plate planes during motion in the plate guidance, by designing and disposing the stops (4, 5) in such a manner that the stops (4, 5) ensure that the plates (2, 3) are parallel in the upper (9) and lower (10) stop positions.

2. Device according to claim 1, **characterized in that** each of the stops (4, 5) has at least three stop points (4', 4", 4"', 4"" and 5', 5", 5"', 5""), which abut the outer surface area of the moved plate (2 and/or 3).

3. Device according to claims 1 and 2, **characterized in that** the stops (4, 5) are provided with means for adjusting the parallelism of the stop positions (9, 10).

4. Device according to claim 2 or 3, **characterized in that** the means (8) for adjusting the volume is designed such that the stop points (4', 4", 4"', 4"" and/or 5', 5", 5"', 5"") of the adjustable stop (4 and/or 5) can be simultaneously adjusted in height.

5. Device according to claim 4, **characterized in that** the stop points (4', 4", 4"', 4"" and/or 5', 5", 5"', 5"") can be adjusted by stepping motors.

6. Device according to claim 4, **characterized in that** the stop points (4', 4", 4"', 4"" and/or 5', 5", 5"', 5"") are simultaneously adjusted using a transmission (11).

7. Device according to any one of the claims 1 through 6, **characterized in that** the piston plate (2), the cylinder plate (3) and the stops (4, 5) are disposed in a pipetting head (7) which is suspended on a stand (14) using a vertical guidance (13).

8. Device according to claim 7, **characterized in that** the stand (14) has a means (15) for positioning the pipetting head (7) towards a working plate (16) which serves for pipetting, in order to align the grid arrangement of the piston-cylinder units (1, 1', 1") with the grid arrangement of the working positions (33) on the working plate (16).

9. Device according to claim 8, **characterized in that** further positioning means (15) for working plates (16) are provided, which can optionally be moved to correspond to the grid arrangement of the piston cylinder units (1, 1', 1").

10. Device according to claim 9, **characterized in that** the positioning means (15) are disposed on a rotary disc.

11. Device according to claim 9, **characterized in that** the stand (14) has a horizontal guidance (17) for the pipetting head (7) and several positioning means (15) for working plates (16), disposed next to each other below the horizontal guidance (17), and with positioning aids (18) for allocating the grids.

12. Device according to any one of the claims 9 or 11, **characterized in that** several positioning means (15) for working plates (16) are provided which can be displaced, using at least one horizontal guidance (19), to positions defined by positioning aids (20) such that working plates (16) which are located there can be associated with the grid of the piston cylinder units (1, 1', 1").

13. Device according to any one of the claims 7 though 12, **characterized in that** at least one lower stop (12) is provided for the vertical motion of the pipetting head (7).

14. Device according to claim 13, **characterized in that** the at least one lower stop (12) can be adjusted for adjusting the immersion depth into the liquid receptacles of the working plates (16).

15. Device according to claim 13 or 14, **characterized in that** each positioning means (15) for a working plate (16) is associated with a stop (12).

16. Device according to any one of the claims 7 through 15, **characterized in that** the vertical guidance (13) of the pipetting head (7) is associated with a weight balancing means which is dimensioned such that a smooth vertical motion can be performed using little force.

17. Device according to claim 16, **characterized in that** the vertical guidance (13) of the pipetting head (7) is associated with a lift stop which responds to excessive acceleration.

18. Device according to any one of the claims 1 through 17, **characterized in that** the drive mechanism (6) for the piston-cylinder units (1, 1', 1") can be operated by a hand lever (23) with transmission (24).

19. Device according to any one of the claims 1 through 18, **characterized in that** the drive (6) acts on the piston plate (2).

20. Device according to claim 19, **characterized in that** the drive (6) moves the piston plate (2) into its lower stop position (10) and restoring springs (34) return it to the upper stop position (9).

21. Device according to any one of the claims 1 through 20, **characterized in that** the pistons (1') are sealed from the cylinders (1") by seals (31).

22. Device according to claim 21, **characterized in that** the cylinder plate (3) is divided in a horizontal direction and elastic sealing material is embedded in such a fashion that means for compressing the plate parts can adjust the cylinder diameters at the sealing locations, wherein the pistons (1') move in the area of the sealing locations.

23. Device according to any one of the claims 1 through 22, **characterized in that** receiving means (25) are provided at the lower end of the cylinders (1") for disposing liquid receptacles, in particular, pipette tips (26) thereon.

24. Device according to claim 23, **characterized in that** the receiving means (25) for receiving the liquid have elastic rings (27).

25. Device according to claim 23 or 24, **characterized in that** force transmission is provided which presses the pipetting head (7) receiving the liquid receptacles, in particular the pipette tips (26), against a liquid receptacle support, in particular a pipette tip support (28), located in a positioning means (15), or vice versa.

26. Device according to claim 25, **characterized in that** the force transmission is a transmission lever (29) which acts between the stand (14) and the pipetting head (7), forcing the latter against the liquid receptacle support, in particular the pipette tip support (28).

27. Device according to any one of the claims 23 through 26, **characterized in that** a liquid receptacle or pipette tip wiper (30) is provided.

28. Device according to claim 27, **characterized in that** the liquid receptacle or pipette tip wiper (30) is a perforated plate which can be operated by a lever, is disposed below the cylinder plate (3), and can be vertically displaced, having holes which are larger than the receiving means (25) but smaller than the liquid receptacles or pipette tips (26).

29. Device according to any one of the claims 1 through 28, **characterized in that** the lower stop (5', 5", 5"', 5"") is designed as a latch, such that the moved plate (2, 3) can be moved further by overcoming a retaining force forming the stop position (10) of the stop (5', 5", 5"', 5"") or by effecting release of the latch in order to blow out residual liquid.

30. Device according to any one of the claims 1 through 29, **characterized in that** at least one adjustable grid-like intermediate stop is disposed between the upper (4', 4", 4"', 4"") and lower stops (5', 5", 5"', 5"") for dosing received liquid, wherein the intermediate stop also effects parallel alignment of the plates (2, 3) and can be overcome by an increased force or by releasing a latch.

## Revendications

1. Dispositif destiner à recevoir et distribuer des liquides avec un grand nombre d'unités à piston et à vérin (1, 1', 1"), disposées respectivement sur une plaque à piston (2) et sur une plaque à vérin (3), la collecte et la délivrance du liquide s'effectuant par un déplacement des pistons (1') dans les cylindres (1") au moyen d'une modification de la distance entre les plaques (2, 3) par un mécanisme d'entraînement (6) et un guidage des plaques perpendiculairement aux plans des plaques, le volume pouvant être déterminé par une butée supérieure (4) et une butée inférieure (5) dont au moins l'une est réglable à l'aide d'un moyen de réglage (8),
**caractérisé en ce que**
qu'en cas de faibles exigences en terme de parallélité de surface des plans de plaques pendant le mouvement dans le guidage des plaques, les mêmes volumes de recueil et de distribution des unités à cylindre et à piston (1, 1', 1") sont garantis par le fait que les butées (4, 5) sont réalisées et disposées de sorte que la parallélité des plaques (2, 3) est atteinte dans la position de butée supérieure (9) et la position de butée inférieure (10) au moyen des butées (4, 5).

2. Dispositif selon la revendication 1, **caractérisé en ce que** chacune des butées (4, 5) présente au moins trois points de butée (4', 4", 4'", 4"" et 5', 5", 5"', 5"") qui viennent en butée dans la zone externe de surface de la plaque déplacée (2 et/ou 3).

3. Dispositif selon la revendication 1 ou 2, **caractérisé en ce que** les butées (4, 5) sont munies de moyens d'ajustement pour le réglage de la parallélité des positions de butées (9, 10)

4. Dispositif selon la revendication 2 ou 3, **caractérisé en ce que** le moyen de réglage (8) pour le réglage de volume est réalisé de sorte que les points de butée (4', 4", 4"', 4"" et/ou 5', 5", 5'", 5"") de la butée réglable (4 et/ou 5) sont réglables en hauteur simultanément.

5. Dispositif selon la revendication 1, **caractérisé en ce que** les points de butée (4', 4", 4"', 4"" et/ou 5', 5", 5"', 5"") sont réglables par des moteurs pas à pas.

6. Dispositif selon la revendication 4, **caractérisé en ce que** le réglage simultané des points de butée (4', 4", 4"', 4"" et/ou 5', 5", 5"', 5"") s'effectue au moyen d'un engrenage (11).

7. Dispositif selon l'une des revendications 1 à 6, **caractérisé en ce que** la plaque de piston (2), la plaque de cylindre (3) et les butées (4, 5) sont disposées dans une tête de pipettage (7), qui est accrochée par un guide vertical (13) sur un support (14).

8. Dispositif selon la revendication 7, **caractérisé en ce que** le support (14) présente un dispositif de positionnement (15) pour le positionnement de la tête de pipettage (7) par rapport à une plaque de travail servant au pipettage (16) pour faire concorder la disposition de cran d'arrêt des unités à piston et à cylindre (1, 1', 1") avec la disposition de cran d'arrêt des positions de travail (33) sur la plaque de travail (16)

9. Dispositif selon la revendication 8, **caractérisé en ce qu'**il est prévu d'autres dispositifs de positionnement (15) pour des plaques de travail (16) qui peuvent être amenées au choix en concordance avec la disposition de cran d'arrêt des unités à piston et à cylindre (1, 1', 1").

10. Dispositif selon la revendication 9, **caractérisé en ce que** les dispositifs de positionnement (15) sont placés sur un disque rotatif.

11. Dispositif selon la revendication 9, **caractérisé en ce que** le support (14) présente un guide horizontal (17) pour la tête de pipettage (7) et en dessous du guide horizontal (17) plusieurs dispositifs de positionnement (15) les uns à côté des autres pour des plaques de travail (16) ainsi que des aides de positionnement (18) pour l'association des crans d'arrêt.

12. Dispositif selon l'une des revendications 9 ou 11, **caractérisé en ce qu'**il est prévu plusieurs dispositifs de positionnement (15) pour des plaques de travail (16) qui sont coulissants au moyen d'au moins un guide horizontal (19) pour ces positions définies par des aides de positionnement (20) de sorte que des plaques de travail s'y trouvant (16) puissent être associées au cran d'arrêt des unités à piston et à cylindre (1, 1', 1").

13. Dispositif selon l'une des revendications 7 à 12, **caractérisé en ce que** pour le déplacement vertical de la tête de pipettage (7), il est prévu au moins une butée inférieure (12).

14. Dispositif selon la revendication 13, **caractérisé en ce qu'**au moins la butée inférieure (12) est réglable pour le réglage de la profondeur de plongée dans les récipients de liquides des plaques de travail (16).

15. Dispositif selon la revendication 13 ou 14 **caractérisé en ce que** chaque dispositif de positionnement (15) pour une plaque de travail (16) est associé à une butée (12).

16. Dispositif selon l'une des revendications 7 à 15, **caractérisé en ce que** chaque guide vertical (13) de la tête de pipettage (7) est associé à un dispositif de compensation pondérale, qui est dimensionné de sorte qu'un mouvement vertical de manoeuvre facile est possible avec un déploiement de force minimal.

17. Dispositif selon la revendication 1, **caractérisé en ce que** le guide vertical (13) de la tête de pipettage (7) est associé à un blocage antichute réagissant en cas d'accélération élevée.

18. Dispositif selon l'une des revendications 1 à 17, **caractérisé en ce que** le mécanisme d'entraînement(6) pour les unités à piston et à cylindre (1, 1', 1") peut être activé par un levier manuel (23) avec transmission (24).

19. Dispositif selon l'une des revendications 1 à 18, **caractérisé en ce que** l'entraînement (6) agit sur la plaque à de piston (2).

20. Dispositif selon la revendication 19, **caractérisé en ce que** l'entraînement (6) amène la plaque de piston (2) dans sa position inférieure de butée (10) et des ressorts de rappel (34) la ramènent dans sa position de butée supérieure (9).

21. Dispositif selon l'une des revendications 1 à 20, **caractérisé en ce que** les pistons (1') sont rendus étanches par rapport aux cylindres (1") au moyen de garnitures d'étanchéité.

22. Dispositif selon la revendication 21, **caractérisé en ce que** la plaque de cylindre (3) est divisée dans le sens horizontal et le matériau d'étanchéité élastique est logé de sorte que par des moyens de compression des parties de plaque, les diamètres des cylindres sont réglables sur les points d'étanchéité, les pistions (1') se déplaçant dans la zone des points d'étanchéité.

23. Dispositif selon l'une des revendications 1 à 22, **caractérisé en ce que** sur l'extrémité inférieure des cylindres (1") sont disposés des logements (25) pour l'emboîtement de récipients de liquides, en particulier des pointes de pipettes (26).

24. Dispositif selon la revendication 23, **caractérisé en ce que** les logements (25) pour les récipients de liquide sont munis de bagues élastiques (27)

25. Dispositif selon la revendication 23 ou 24, **caractérisé en ce qu'**il est prévu une transmission de force qui presse la tête de pipettage (7) pour le logement des récipients de liquide, en particulier des points de pipette (26) contre un support de récipients de liquide, en particulier un support de pointes de pipettes (28) se trouvant dans un dispositif de positionnement (15) ou inversement.

26. Dispositif selon la revendication 25, **caractérisé en ce que** la transmission de force est un levier de transmission (29) qui en agissant entre le support (14) et la tête de pipettage (7) presse cette dernière contre le support de le récipient de liquide, en particulier contre le support de points de pipettes (28).

27. Dispositif selon l'une des revendications 23 à 26, **caractérisé en ce qu'**il est prévu une raclette de point de pipette ou de récipients de liquide (30).

28. Dispositif selon la revendication 27, **caractérisé en ce que** la raclette de pointe de pipette ou de récipients de liquide (30) est une plaque perforée coulissante verticalement, disposée en dessous de la plaque de cylindre (3) et actionnée par levier dont les trous sont plus grands que ceux des logements (25), mais plus petits que ceux des récipients de liquide ou pointes de pipette (26).

29. Dispositif selon l'une des revendications 1 à 28, **caractérisé en ce que** la butée inférieure (5, 5', 5", 5'", 5"") est réalisée comme un cran d'arrêt de sorte que la plaque déplacée (2, 3) peut se déplacer en surmontant une force de retenue formant la position (10) de la butée (5, 5', 5", 5"', 5"") et, en actionnant un déverrouillage, peut aller un peu plus loin pour évacuer les résidus de liquides restants.

30. Dispositif selon l'une des revendications 1 à 29, **caractérisé en ce que** pour une distribution par portion du liquide recueilli entre les butées supérieures (4, 4', 4", 4 "', 4"") et les butées inférieures (5, 5', 5", 5 "', 5""), il est disposé au moins une butée intermédiaire réglable en forme de cran d'arrêt qui provoque également une orientation parallèle des plaques (2, 3) et qui peut être surmontée par une force accrue ou en actionnant un déverrouillage.
